# EUROPÄISCHE PATENTSCHRIFT

(11) **EP 0 827 861 B1**
(45) Veröffentlichungstag und Bekanntmachung des Hinweises auf die Patenterteilung: **29.01.2003**
(21) Anmeldenummer: 97111500.1
(22) Anmeldetag: 08.07.1997
(51) Int. Cl.: B60K 41/22, F16H 61/04

(54) **Verfahren zum Schalten eines Doppelkupplungsgetriebes und Doppelkupplungsgetriebe**
Method for gear shift of a double clutch gearbox and double clutch transmission therefor
Procédé de changement de vitesses d'une boîte de vitesses à double embrayage et transmission à double embrayage

(30) Priorität: 08.08.1996 DE 19631983; 21.03.1997 DE 19711820
(43) Veröffentlichungstag der Anmeldung: 11.03.1998
(73) Patentinhaber: Volkswagen Aktiengesellschaft, 38436 Wolfsburg (DE)
(72) Erfinder: Adamis, Panagiotis, Prof., 38442 Wolfsburg (DE); Cappelmann, Bernd, Dipl.-Ing., 38176 Wendeburg-Neubrück (DE); Haack, Reinhold, Dipl.-Ing., 38106 Braunschweig (DE); Damm, Ansgar, Dr., 38518 Gifhorn (DE); Ludanek, Harald, Dr., 38547 Calberlah (DE)

(56) Entgegenhaltungen:
- DE-A- 4 017 961
- DE-A- 4 031 570

## Beschreibung

Die Erfindung betrifft ein Verfahren zum Schalten eines Doppelkupplungsgetriebes mit zwei Getriebeeingangswellen und einer Getriebeabtriebswelle, wobei jeder Eingangswelle eine Reibkupplung zugeordnet ist und im Ausgangszustand eine der beiden Kupplungen im Haftzustand ein Motormoment überträgt, und die andere Kupplung geöffnet ist, wobei der einzulegende Gang auf der gleichen einen Getriebeeingangswelle angeordnet ist wie der eingelegte Gang.

Die Erfindung betrifft weiterhin ein Doppelkupplungsgetriebe mit zwei Getriebeeingangswellen und einer Getriebeabtriebswelle zum Betrieb gemäß eines Schaltverfahrens gemäß der Erfindung.

Der Gegenstand dieser Patentanmeldung ist eine Weiterentwicklung zur deutschen Anmeldung Nr. P 196 31 983.8. Auf die Offenbarung dieser älteren Patentanmeldung wird ausdrücklich Bezug genommen.

In der deutschen Patentanmeldung Nr. P 196 31 983.8 (im weiteren als ältere deutsche Patentanmeldung bezeichnet) wird ein erfindungsgemäßes Verfahren zum Schalten eines Doppelkupplungsgetriebes beschrieben, bei dem alternativ eine erste der beiden Kupplungen während des Schaltvorganges so geregelt wird, daß sie sich in der Gleitreibung befindet. Durch entsprechendes Steuern der verbleibenden zweiten Kupplung kann erreicht werden, daß die Kupplung des Quellganges, d.h. des eingelegten Ganges, momentenfrei gemacht wird, indem das Motormoment auf die jeweils andere Kupplung verlagert wird, und so ein Herausnehmen des eingelegten Ganges möglich wird.

Es ist ein lang bekannter Nachteil von Doppelkupplungsgetrieben mit zwei üblicherweise koaxial zueinander angeordneten Getriebeeingangswellen, daß ein Gangwechsel über zwei Gangstufen hinweg nicht direkt möglich ist, sondern nur über den Umweg des zwischen den beiden betrachteten Gängen liegenden Ganges. Dabei sind bisher entwickelte Doppelkupplungsgetriebe üblicherweise so aufgebaut, daß die treibenden Zahnräder jeweils benachbarter Gänge auf unterschiedlichen Getriebeeingangswellen liegen, so beispielsweise bei einem 6-Gang-Getriebe die Gänge ungerader Ordnungszahl auf der ersten Getriebeeingangswelle und die treibenden Zahnräder der Gänge gerader Ordnungszahl auf der zweiten Getriebeeingangswelle.

Weiterhin ist im Stand der Technik ein Doppelkupplungsgetriebe gemäß dem Oberbegriff des Anspruchs 1 bekannt (DE 40 17 961 A1), wobei aber während einer Lastschaltung/Überschneidungsschaltung der Kupplungen die Synchronisierung der Gangschaltkupplungen erfolgt. Hier wird demnach ein bestimmtes Schaltungsprinzip der Kupplungen offenbart. Schließlich sind im Stand der Technik weitere Doppelkupplungsgetriebe bekannt, bspw. wie in der DE 40 31 570 A1 beschrieben.

Mit dem eingangs beschriebenen Getriebe und dem in der Hauptanmeldung vorgeschlagenen Schaltverfahren muß daher ein Fahrer die Gänge beim Herauf- oder Herunterschalten in aufsteigender oder absteigender Ordnung ihrer Ordnungszahlen durchlaufen. Dies ist insbesondere bei Überholvorgängen lästig, wenn ein Fahrer beispielsweise aus dem vierten in den zweiten Gang herunterschalten möchte, um ein der Verkehrssituation angemessenen Überschuß an Zugkraft zu erzeugen.

Es ist jedoch ein Vorteil des in der Hauptanmeldung beschriebenen Schaltverfahrens, daß der gesamte Triebstrang während des Schaltens nie drehmomentlos wird, so daß das gesamte, im Triebstrang sich aufaddierende Spiel der einzelnen Bauteile immer unter Spannung gehalten wird. Darauf folgt, daß es nicht zu einem Schlagen oder sonstigen Drehmomentsprüngen kommen kann, die subjektiv für den Fahrer starke Komforteinbußen darstellen.

Ein weiterer großer Vorteil des Doppelkupplungsgetriebes und des in der Hauptanmeldung beschriebenen Schaltverfahrens ist es, daß es beim Schalten nicht zu Zugkraftunterbrechungen kommt, wie sie von herkömmlichen Handschaltgetrieben bekannt sind.

Der Erfindung dieser Patentanmeldung liegt daher die Aufgabe zugrunde, das in der älteren deutschen Patentanmeldung angemeldete Verfahren so weiter zu entwickeln, daß ein Schalten eines gattungsgemäßen Doppelkupplungsgetriebe dergestalt möglich wird, daß Quellgang und Zielgang, d.h. eingelegter und einzulegender Gang, auf der gleichen Getriebeeingangswelle angeordnet sein können, ohne daß die beschriebenen Vorteile des Schaltverfahrens verloren gehen.

Die vorstehende Aufgabe wird durch die Maßnahmen des Anspruchs 1 gelöst.

In der genannten älteren deutschen Patentanmeldung ist eine Sprachregelung getroffen, bei der unter der "einen" Getriebeeingangswelle jeweils die zum Zeitpunkt der geplanten Getriebeschaltung lastübertragende, d.h. eine momentenführende Welle verstanden werden soll.

Diese Sprachregelung soll für diese Patentanmeldung beibehalten werden. Unter der "anderen" Getriebeeingangswelle wurde in der zitierten älteren deutschen Patentanmeldung jeweils die den zu schaltenden Gang tragende, zunächst frei rotierende Welle verstanden. Im Rahmen dieser Zusatzanmeldung wird davon ausgegangen, daß Quellgang und Zielgang, d.h. zum Zeitpunkt der Getriebeschaltung lastübertragender und einzulegender Gang, auf der gleichen "einen" Getriebeeingangswelle angeordnet sind. Im Rahmen dieser Patentanmeldung ist demgemäß unter der "anderen" Getriebeeingangswelle die Getriebeeingangswelle zu verstehen, die den weiteren Gang (Hilfsgang) trägt. Dabei kann der weitere Gang (Hilfsgang) ein beliebiger Gang sein. Sinnvoll eingesetzt wird das erfindungsgemäße Verfahren insbesondere beim Schalten unter Zug, wobei demgemäß insbesondere die oberen Gänge eines Getriebes als weitere Gänge (Hilfsgänge) zum Einsatz kommen können, wenn Schaltungen zwischen den unteren oder mittleren Gängen vorgenommen werden, insbesondere über zwei Gänge hinweg.

Erfindungsgemäß kann das Verfahren so ausgestaltet sein, daß
- auf der anderen Getriebeeingangswelle vorbereitend der weitere Gang eingelegt wird oder bereits eingelegt ist, dessen Übersetzungsverhältnis länger ist als dasjenige sowohl des einzulegenden Ganges wie des eingelegten Ganges,
- die eine Kupplung durch einen Schlupfregler geregelt so weit geöffnet wird, daß sie an der Gleitgrenze arbeitet,
- die andere Kupplung gesteuert soweit geschlossen wird, bis die eine, durch den Schlupfregler an der Gleitgrenze betriebene Kupplung kein Moment mehr überträgt, und statt dessen das Füllmoment über den weiteren Gang übertragen wird,
- die eine Kupplung dann voll geöffnet wird, so daß die andere Kupplung allein die Motorleistung überträgt,
- der eingelegte Gang im wesentlichen momentenfrei herausgenommen wird,
- die eine Kupplung wieder geschlossen wird,
- die eine Getriebeeingangswelle mittels des weiteren Ganges und geeigneter Regelung der anderen Kupplung (Schließen beim Hochschalten/Öffnen beim Herunterschalten) auf die Synchrondrehzahl des neuen einzulegenden Ganges gebracht wird,
- bei synchroner Drehzahl der einen Getriebeeingangswelle der neue einzulegende Gang eingelegt wird,
- die andere Kupplung geregelt geöffnet wird, so daß die eine Kupplung Moment überträgt,
- bis die eine Kupplung gemäß der gewählten Stellfunktion wieder das gesamte Motormoment überträgt;
oder daß
- auf der anderen Getriebeeingangswelle vorbereitend der weitere Gang eingelegt wird oder bereits eingelegt ist, dessen Übersetzungsverhältnis länger ist als dasjenige sowohl des einzulegenden wie des eingelegten Ganges,
- die andere Kupplung durch einen Schlupfregler geregelt so weit geschlossen wird, daß sie an der Gleitgrenze arbeitet,
- die eine Kupplung gesteuert geöffnet wird, bis die andere, durch den Schlupfregler an der Gleitgrenze betriebene Kupplung das volle, aus Motorleistung und Drehzahl sich ergebende Moment überträgt,
- die andere Kupplung dann voll geschlossen wird, so daß die andere Kupplung allein die Motorleistung überträgt, und
- wenn die eine Kupplung voll geöffnet ist, der eingelegte Gang im wesentlichen momentenfrei herausgenommen wird,
- die eine Kupplung wieder geschlossen wird,
- die eine Getriebeeingangswelle mittels des weiteren Ganges und geeigneter Regelung der anderen Kupplung (Schließen beim Hochschalten/Öffnen beim Herunterschalten) auf die Synchrondrehzahl des neuen einzulegenden Ganges gebracht wird,
- bei synchroner Drehzahl der einen Getriebewelle der neue einzulegend Gang eingelegt wird,
- die andere Kupplung geregelt geöffnet wird, so daß die eine Kupplung Moment überträgt,
- bis die eine Kupplung gemäß der gewählten Stellfunktion wieder das gesamte Motormoment überträgt.

Ein Vergleich mit den Hauptansprüchen 1 und 2 der genannten älteren deutschen Patentanmeldung 19631983.8, die zwei gleichberechtigte, alternativ nebeneinanderstehende Verfahren beschreiben, um von einem Gang auf der "einen" Getriebeeingangswelle auf einen Gang auf der "anderen" Getriebeeingangswelle zu schalten, zeigt, daß das Verfahren gemäß der älteren deutschen Patentanmeldung als erstes Teilverfahren genutzt wird, um in den Hilfsgang zu schalten. Dieses wird beim Hoch- oder Herunterschalten unter Zug einer der oberen Gänge sein, der dann bei im Gleitzustand sich befindender, d.h. schleifender Kupplung zumindest ein "Füllmoment" auf die Straße zu bringen in der Lage ist, so daß störende Zugkraftunterbrechungen entfallen.

Um sodann in den eigentlichen Zielgang schalten zu können, ist es erforderlich, die "eine" Getriebeeingangswelle auf Ihre Synchrondrehzahl zu bringen. Hierzu wird die "eine" Kupplung wieder geschlossen. Durch entsprechende Steuerung oder Regelung der "anderen" Kupplung ist es möglich, die "eine" Getriebeeingangswelle, die den zu schaltenden Zielgang bzw. das treibende Zahnrad der entsprechenden Zahnradpaarung trägt, entweder zu beschleunigen, dann nämlich, wenn in einen niedrigeren Gang geschaltet werden soll, oder abzubremsen, dann nämlich, wenn in einen höheren Gang geschaltet werden soll.

Hierzu wird zum Abbremsen die "andere" Kupplung geschlossen, während zum Beschleunigen die "andere" Kupplung geöffnet wird, so daß durch Wegfallen des durch die "andere" Kupplung übertragenen Momentes die im Rotationsträgheitsmoment des Motors gespeicherte Rotationsenergie zu einer Anhebung der Motordrehzahl führt, die über die geschlossene "eine" Kupplung an die "eine", den zu schaltenden Gang tragende, zu synchronisierende Getriebeeingangswelle weitergegeben wird.

Es ist theoretisch denkbar, ein solches Verfahren beispielsweise auf ein 6-Gang-Getriebe anzuwenden, bei dem lediglich der sechste Gang auf der "anderen" Getriebeeingangswelle angeordnet ist, so daß die vorgeschlagene Schaltungsart zwischen sämtlichen denkbaren Kombinationen der unteren fünf Gänge, deren treibende Zahnräder sämtlich auf der "einen" Getriebeeingangswelle angeordnet sein sollen, möglich ist. Dem steht jedoch entgegen, daß die Spreizung der unteren Gänge wesentlich größer ist, als die der oberen, so daß bei einem Schaltübergang beispielsweise vom ersten in den dritten Gang der sechste Gang als Hilfsgang untauglich sein kann.

Bei einer bevorzugten Ausführungsform eines erfindungsgemäßen Doppelkupplungsgetriebes sind daher die Gänge 2 und 6 auf der "anderen" Getriebeeingangswelle angeordnet, während die Gänge 1, 3, 4 und 5 auf der "einen" Getriebeeingangswelle angeordnet sind.

Bei einem solchen Getriebe ist ein Wechsel zwischen den unteren drei Gängen jeweils nur zwischen benachbarten Ordnungszahlen möglich, gemäß dem in der Hauptanmeldung beschriebenen Verfahren. Zwischen den Gängen 3, 4 und 5 ist ein unbeschränkter Wechsel möglich, wobei gemäß dem Verfahren der hiesigen Zusatzanmeldung der höchste Gang als Hilfsgang verwendet wird. Es wird so ein spontaner Wechsel über mehrere Gangstufen in einem Gangbereich ermöglicht, in dem Überholmanöver bevorzugt abgewikelt werden.

Die Erfindung wird im folgenden anhand der Zeichnung näher erläutert. In der Zeichnung zeigen:
- Figur 1 -: eine schematische Darstellung eines erfindungsgemäßen Doppelkupplungsgetriebes mit einer gestrichelt dargestellten Variante hinsichtlich des vierten Ganges,
- Figur 2 -: den Verlauf von Motor- und Getriebeeingangsdrehzahlen, Motor- und Getriebeeingangsmomenten und Getriebeausgangsmoment für die Hochschaltung im Zug vom zweiten in den vierten Gang, wobei der fünfte Gang als Hilfsgang benutzt wird, und
- Figur 3 -: den Verlauf von Motor- und Getriebeeingangsdrehzahlen, Motor- und Getriebeeingangsmomenten und Getriebeausgangsmoment für die Herunterschaltung vom vierten in den zweiten Gang im Schub, wobei ebenfalls der fünfte Gang als Hilfsgang verwendet wird.

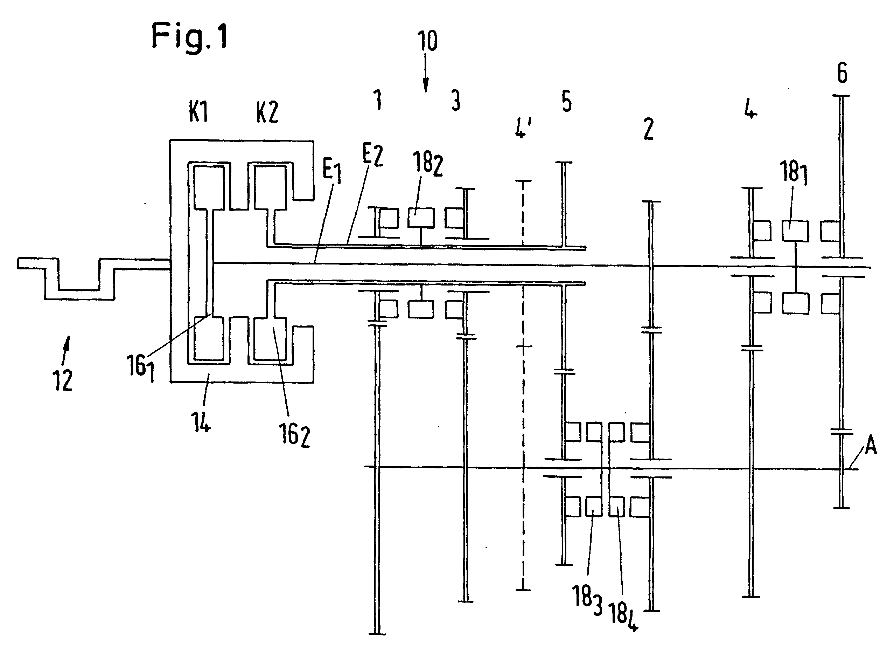

Figur 1 zeigt schematisch dargestellt ein erfindungsgemäßes Doppelkupplungsgetriebe 10, das im wesentlichen dem Doppelkupplungsgetriebe gemäß Figur 1 der älteren deutschen Patentanmeldung entspricht. Lediglich die Reibradgetriebe RG₁ und RG₂ sind der besseren Übersichtlichkeit halber fortgelassen worden.

Das erfindungsgemäße Doppelkupplungsgetriebe 10 wird durch eine Brennkraftmaschine angetrieben, die durch ihre Kurbelwelle 12 symbolisiert wird. Zwei Kupplungen K₁ und K₂ weisen einen gemeinsamen äußeren Kupplungskorb 14 auf und sind konzentrisch nebeneinander angeordnet. Mit der jeweiligen Reibplatte 16₁ und 16₂ sind eine (erste) Getriebeeingangswelle E₁ und eine andere (zweite) Getriebeeingangswelle E₂ verbunden. Die Getriebeeingangswelle E₂ ist als Hohlwelle ausgeführt und umgibt die Getriebeeingangswelle E₁.

Insgesamt sechs Zahnradpaarungen 1 bis 6 stehen für die einzelnen Gänge. Die Antriebsräder der Gänge 5 und 2 sind mit der jeweiligen Getriebeeingangswelle fest verbunden, während die Antriebsräder der Gänge 1, 3, 4 und 6 als nadelgelagerte Losräder ausgeführt sind, die klauenbetätigt über Schiebemuffen 18₁ und 18₂ betätigt werden können.

Eine Getriebeabtriebswelle A trägt insgesamt sechs Abtriebsräder, wobei die Abtriebsräder der Gänge 5 und 2 als Losräder ausgeführt sind und über zwei unabhängige Schiebemuffen 18₃ und 18₄ geschaltet werden können. Die Abtriebsräder der Gänge 1, 3, 4 und 6 sind fest mit der Getriebeabtriebswelle A verbunden.

Im ersten Gang läuft der Kraftfluß über die geschlossene Kupplung K₂, die Getriebeeingangswelle E₂, die Schiebemuffe 18₂, das Antriebsrad des ersten Ganges auf das Abtriebsrad des ersten Ganges auf die Getriebeabtriebswelle A.

Bei eingerückter Kupplung K₂ und entsprechend nach rechts verschobener Schiebemuffe 18₂ ist der dritte Gang geschaltet, bei eingerückter Kupplung K₂ und Schiebemuffe 18₃ in der linken Stellung ist der fünfte Gang geschaltet.

Analog sind bei eingerückter Kupplung K₁, jedoch geöffneter Kupplung K₂ die Gänge 2, 4 und 6 geschaltet, je nach Stellung der Schiebemuffen 18₁, 18₂ und 18₄.

In der Nomenklatur der Ansprüche ist die Kupplung, die im Ausgangszustand die Motorleistung überträgt, d.h. im wesentlichen im eingerückten Zustand, d.h. in der Haftreibung, sich befindet, die "eine" Kupplung, während die den Hilfsgang tragende Kupplung jeweils die "andere" Kupplung ist. Im Gegensatz zu dem in der älteren deutschen Patentanmeldung beschriebenen Verfahren befinden sich bei der Schaltweise gemäß vorliegender Zusatzanmeldung Quellgang und Zielgang auf der gleichen Getriebeeingangswelle, in den dargestellten Beispielen auf der Getriebeeingangswelle E₁. Mit dieser Wahl soll jedoch keine Einschränkung verbunden sein.

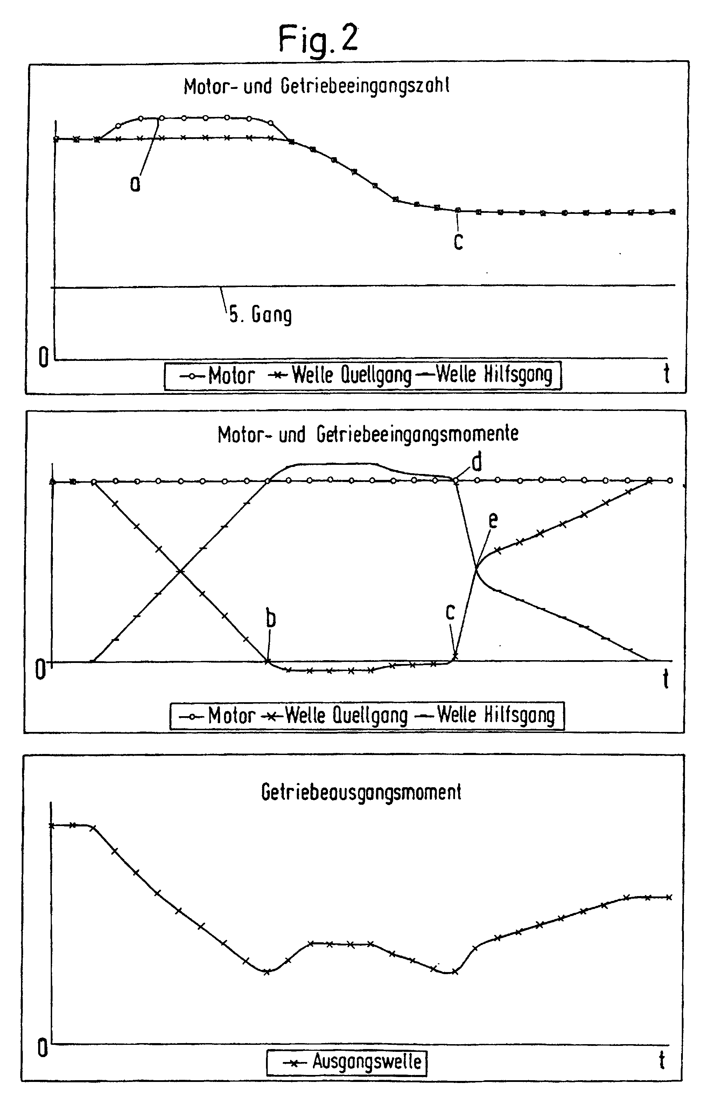

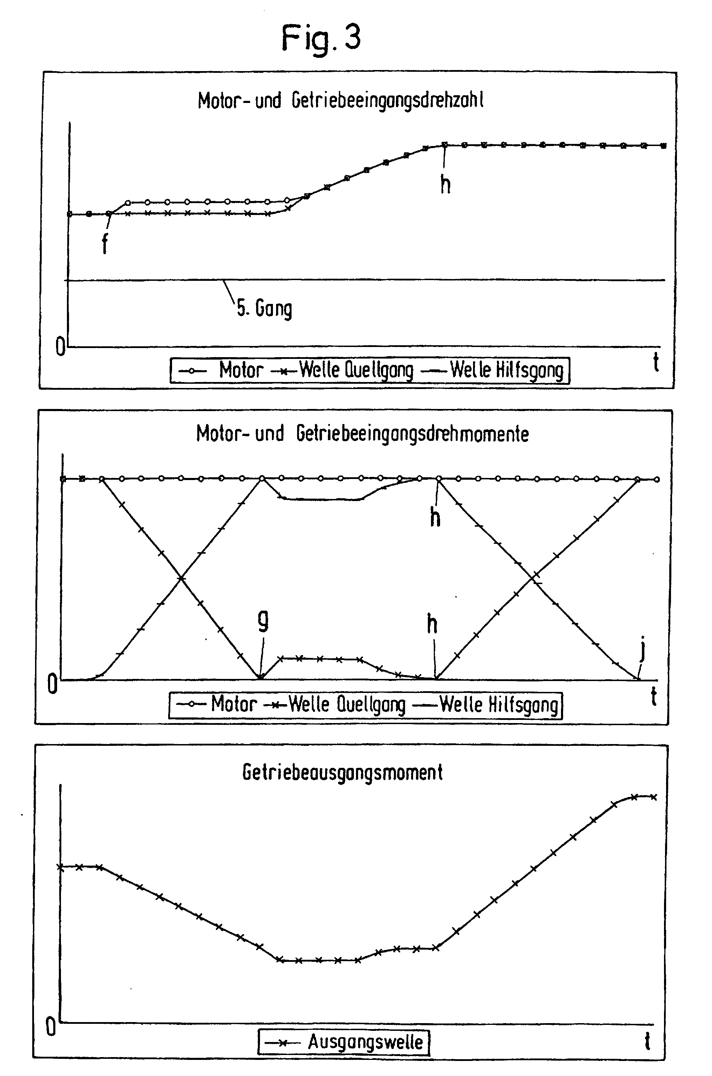

Die denkbaren Schaltvorgänge werden im folgenden anhand der Figuren 2 und 3 erläutert, wobei jeweils zwischen den Gängen 2 und 4 geschaltet wird, während der fünfte Gang, der auf der "anderen" Getriebeeingangswelle E₂ angeordnet ist, als Hilfsgang verwendet wird.

Dabei gelten für alle Darstellungen folgende prinzipiellen Überlegungen: Bei Doppelkupplungsgetrieben können bei eingelegten Gängen beide Kupplungen im Eingriff sein. Dabei kann immer nur eine Kupplung in Haftreibung sein, aber es ist ein zulässiger Betriebszustand, wenn
- eine Kupplung in Haftreibung und die andere in Gleitreibung ist, oder
- beide Kupplungen in Gleitreibung sind.

Für jede einzelne Kupplung gilt:
- Ist ein Kupplung in Gleitreibung und ist die Motordrehzahl größer als die Getriebeeingangswellendrehzahl, dann wird positives (das Fahrzeug antreibende) Moment in die Getriebeeingangswelle eingespeist.
- Ist eine Kupplung in Gleitreibung und ist die Motordrehzahl kleiner als die Getriebeeingangswellendrehzahl, dann wird negatives (das Fahrzeug abbremsendes) Moment in die Getriebeeingangswelle eingespeist.

Für den Fall, daß beide Kupplungen eines Doppelkupplungsgetriebes in Gleitreibung sind, gilt folgendes:
- Ist die Motordrehzahl größer als die Getriebeeingangsdrehzahl des kleineren Ganges, dann übertragen beide Getriebeeingangswellen positives Moment.
- Ist die Motordrehzahl kleiner als die Getriebeeingangsdrehzahl des größeren Ganges, dann übertragen beide Getriebeeingangswellen negatives Moment.
- Ist der kleinere Gang in Haftreibung, dann überträgt auch der größere Gang positives Moment.

Der kleinere Gang ist dabei immer derjenige mit der höheren Getriebeeingangsdrehzahl.

In den Figuren sind folgende Vereinfachungen gemacht:
- Keine Fahrzeugbeschleunigung während des Schaltvorgangs gezeichnet.
- Keine Momentenänderung des Motors durch Drehzahländerung bei Einleitung des Dauerschlupfs gezeichnet.
- Keine Momentenänderung durch Drehzahländerung des Motors während der Schaltvorgänge im Zug gezeichnet.

Figur 2 zeigt die Hochschaltung im Zug, d.h. der Motor liefert ein positives Drehmoment an das Getriebe. Ohne Beschränkung der Allgemeinheit soll angenommen werden, daß das Getriebe zunächst im zweiten Gang betrieben wird, d.h. die Kupplung des kleineren Ganges 2, K₁, befindet sich in Haftreibung. Zielgang soll der Gang 4 sein, d.h. es soll eine Gangstufe übersprungen werden. Der Gang 4 befindet sich auf der gleichen Getriebeeingangswelle E₁, so daß das in der älteren deutschen Patentanmeldung beschriebene Verfahren nicht anwendbar ist. Der Kraftfluß fließt - vgl. Figur 1 - von der Brennkraftmaschine 12 über die Kupplung K₁ auf die Getriebeeingangswelle E₁, über die Zahnradpaarung des zweiten Ganges und die Schiebemuffe 18₄ auf die Getriebeabtriebswelle A.

Gleichzeitig sei der fünfte Gang als Hilfsgang bereits geschaltet, d.h. auch die Schiebemuffe 18₃ ist in die Verriegelungsstellung, d.h. in Figur 1 nach links, geschaltet. Es handelt sich hierbei sozusagen um eine vorausschauende "Bevorratung" des fünften Ganges als Hilfsgang, um in dem Fall, daß der Fahrer vom zweiten nicht gemäß dem Schaltverfahren der älteren deutschen Patentanmeldung in den dritten Gang wechseln, sondern diesen überspringend in den vierten Gang wechseln will, den fünften Gang sofort als Hilfsgang zur Verfügung zu haben.

Die Getriebeeingangswelle E₂ dreht also bei geöffneter Kupplung K₂, getrieben über den fünften Gang, momentenlos mit.

In Übereinstimmung mit den Prinzipien der älteren deutschen Patentanmeldung kann nun der zweite Gang momentenlos gemacht werden, indem das Motormoment durch geschicktes Steuern der Kupplungen K₁ und K₂ auf den fünften Gang, der bereits eingelegt ist, verlagert wird. Die alternativ denkbaren Verfahrensschritte sind in den Unteransprüchen 2 und 3 beschrieben.

Es sei angenommen, daß die Kupplung K₁ mit einem Schlupfregler an der Haftreibungsgrenze, d.h. in der Gleitreibung, betrieben wird, entsprechend dem leichten Ansteigen der Motordrehzahl in der oberen Darstellung der Figur 1, bezeichnet mit a.

Zum Zeitpunkt b ist, wie die mittlere Darstellung in Figur 2 zeigt, das gesamte Motormoment von der Kupplung K₁ des zweiten Ganges auf die Kupplung K₂ des fünften Ganges verlagert worden, d.h. die Kupplung K₁, die "eine" Kupplung, ist momentenlos, während die "andere" Kupplung das gesamte Motormoment überträgt. Der zweite Gang nun momentenfrei, d.h. ohne Ruck, herausgenommen werden. Das Getriebeausgangsmoment ist entsprechend dem geänderten Übersetzungsverhältnis zwischen zweiten und fünften Gang gefallen, wie die untere Darstellung in Figur 2 zeigt. Das Getriebeausgangsmoment ist jedoch nicht vollständig zusammengebrochen, wie dies bei konventionellen Handschaltgetrieben der Fall ist, sondern es wird weiterhin ein Stützmoment oder "Füllmoment" durch den fünften Gang als Hilfsgang geliefert.

In der sich anschließenden zweiten Phase des erfindungsgemäßen Verfahrens ist die Getriebeeingangswelle E₁ auf die Synchrondrehzahl des vierten Ganges zu bringen. Zu diesem Zweck wird die Kupplung K₁ wieder vollständig geschlossen. Die Kupplung K₁ schafft also eine Verbindung zwischen der Getriebeeingangswelle E₁ und der Kurbelwelle 12, so daß sich die Getriebeeingangswelle E₁ mit Motordrehzahl dreht. Durch weiteres Zufahren der Kupplung K₂ wird der Motor abgebremst, entsprechend einem negativen Moment an der Getriebeeingangswelle E₁, die negativ beschleunigt, d.h. gebremst wird. Die mittlere Darstellung in Figur 2 zeigt, daß das an der Welle des Quellganges, d.h. im vorliegenden Beispiel an der Getriebeeingangswelle E₁ anliegende Moment negativ wird, d.h. die Welle wird gebremst. Zum Zeitpunkt c hat die Getriebeeingangswelle E₁ die Synchrondrehzahl des vierten Ganges erreicht, der vierte Gang kann momentenfrei - wie die mittlere Darstellung in Figur 2 zeigt - eingelegt werden.

Der Zusammenhang der oberen und mittleren Darstellung in Figur 2 zeigt erfindungswesentlich einen weiteren Zusammenhang: Die Steigung der Kurve der Getriebeeingangsdrehzahl in der oberen Darstellung zwischen den Drehzahlen des zweiten und vierten Ganges entspricht einem Gradienten, d.h. einem dw/dt. Dieser Gradient ist proportional zu dem auf die Getriebeeingangswelle einwirkendem Bremsmoment in der mittleren Darstellung zwischen den Zeitpunkten b und c. Aus dem notwendigen Gradienten zwischen den Drehzahlen des zweiten und vierten Ganges kann daher ein Maß für das Bremsmoment abgeleitet werden und somit eine Regelstrategie für die Kupplung K₂. Entsprechende Regelstrategien sind in umfangreichen Abwandlungen denkbar und fallen sämtlich in den Schutzbereich dieser Erfindung.

Zum Zeitpunkt d wird die Kupplung K₂ sprungartig um einen gewissen Stellweg geöffnet, gleichbedeutend mit einem negativen Momentensprung, der wiederum einem positiven Momentensprung an der Getriebeeingangswelle E₁ entspricht, da das Motormoment von der Kupplung K₂ wieder auf die Kupplung K₁ verlagert wird. Es hat sich herausgestellt, daß insbesondere beim Hochschalten ein solcher Momentensprung sinnvoll ist. Anschließend wird zum Zeitpunkt e die Kupplung K₂ rampenförmig kontinuierlich geöffnet, bis das gesamte Motordrehmoment, das von der Kurbelwelle 12 geliefert wird, wieder über die Kupplung K₁ in den vierten Gang übertragen wird.

Figur 3 zeigt beispielhaft den Fall des Herunterschaltens aus dem vierten in den zweiten Gang, wobei der dritte Gang übersprungen werden soll.

Dabei soll in Übereinstimmung mit dem zuvor erläuterten Beispiel des Heraufschaltens aus dem zweiten in den vierten Gang angenommen werden, daß der fünfte Gang bereits präventiv eingelegt ist, d.h. die Schiebemuffe 18₃ befindet sich in der Verriegelungsstellung, d.h. in der linken Stellung. Die Schiebemuffe 18₁ hat den vierten Gang geschaltet, das Motordrehmoment wird über die Kupplung K₁ und die Getriebeeingangswelle E₁ über den vierten Gang auf die Getriebeabtriebswelle A übertragen.

Gemäß Figur 3 obere Darstellung wird zum Zeitpunkt f die Kupplung K₁ in die Gleitreibung gebracht und auf eine Solldrehzahl geregelt, entsprechend einer geringfügigen Steigerung der Motordrehzahl in der oberen Darstellung in Figur 3. Durch langsames gesteuertes oder geregeltes Zufahren der Kupplung K₂ - während die Kupplung K₁ weiter auf die gleiche Drehzahl geregelt wird - wird das Motordrehmoment - wie die mittlere Darstellung in Figur 3 zeigt - von der Kupplung K₁ auf die Kupplung K₂ stetig verlagert, bis die Kupplung K₁ zum Zeitpunkt g momentenlos ist und der vierte Gang ohne Ruck durch entsprechendes Freigeben der Schiebemuffe 18₁ herausgenommen werden kann.

Anschließend wird die Kupplung K₁ wieder geschlossen, so daß die Getriebeeingangswelle E₁ mit Motordrehzahl dreht. Es ist nun notwendig, die Getriebeeingangswelle E₁ auf die Synchrondrehzahl des zweiten Ganges zu beschleunigen, um denselben einlegen zu können. Hierzu wird die Kupplung K₂ weiter geöffnet, so daß bei unverändertem Leistungsstellglied des Motors dieser seine Drehzahl steigert. Darüber hinaus wird die im gesamten Massenträgheitsmoment des Motors gespeicherte Rotationsenergie in höhere Drehzahlen umgesetzt.

Entsprechend - vgl. mittlere Darstellung in Figur 3 - liegt zwischen den Zeitpunkten g und h ein positives Moment an der Getriebeeingangswelle E₁ an, das diese beschleunigt, bis diese zum Zeitpunkt h die Synchrondrehzahl des zweiten Ganges erreicht hat und entsprechend durch Betätigen der Schiebemuffe 18₄ dieser eingelegt werden kann.

Das anhand von Figur 2 bereits Erläuterte über den Zusammenhang zwischen Drehzahlgradient dw/dt zwischen den Zeitpunkten g und h des Herausnehmens des Quellganges und des Einlegens des Zielganges gilt auch vorliegend. Zwischen den Zeitpunkten g und h ist ein bestimmbarer Drehzahlgradient dw/dt notwendig, der proportional zu dem zwischen den Zeitpunkten g und h anliegenden Moment ist. Hieraus lassen sich entsprechende Regelstrategien für die Kupplung K₂ ableiten.

Nach Einlegen des vierten Ganges zum Zeitpunkt h wird die Kupplung K₂ rampenförmig geöffnet, entsprechend einem kontinuierlich sich verringernden übertragbaren Motordrehmoment. Zum Zeitpunkt i ist das gesamte Motordrehmoment wieder von der Kupplung K₂ auf die Kupplung K₁ - die die Getriebeeingangswelle E₁ treibt - verlagert worden.

Wie die untere Darstellung des Getriebeausgangsmomentes in Figur 3 zeigt, ist das das Fahrzeug treibende Moment niemals auf 0 zusammengebrochen, da zwischen den Zeitpunkten g und h über den fünften Gang als Hilfsgang ein Füllmoment geliefert wird.

Vorteilhaft ist insbesondere, daß der gesamte Triebstrang niemals momentenlos wird, so daß sich das gesamte zwischen den einzelnen Bauteilen befindliche Spiel nicht negativ bemerkbar macht, beispielsweise in Form von Schlägen, die subjektive Komforteinbußen für den Fahrer darstellen.

Figur 1 zeigt weiterhin ein alternative Ausführungsform des erfindungsgemäßen Getriebes, bei dem lediglich die Gänge 2 und 6 auf der "anderen" Getriebeeingangswelle E₂ angeordnet sind. Der vierte Gang soll als Gang 4', wie gestrichelt dargestellt, ebenfalls auf der "einen" Getriebeeingangswelle E₁ angeordnet sein.

Eine solche Anordnung bietet den Vorteil, daß die Gassenwahl und mechanische Konstruktion der Betätigungselemente zum Gangwechsel mit lediglich den Gängen 2 und 6 auf der zweiten Getriebeeingangswelle einfacher zu realisieren ist. Denkbar wäre theoretisch, die Gänge 1 bis 5 auf der Getriebeeingangswelle E₁ und lediglich den sechsten Gang auf der Getriebeeingangswelle E₂ anzuordnen, um die Konstruktion des Getriebes weiter zu vereinfachen. Dies stößt jedoch insofern auf Schwierigkeiten, als dann auch die Schaltvorgänge in den unteren Gängen 1, 2 und 3 jeweils mit Hilfe des sechsten Ganges als Hilfsgang abgewickelt werden müßten. Dies ist insofern nachteilig, als zwar die Spreizung der oberen Gänge vergleichsweise eng beieinanderliegt, jedoch zu den unteren Gängen ein erheblicher Sprung vorhanden ist. Eine Schaltung vom ersten in den zweiten Gang und vom zweiten in den dritten Gang unter zwischenzeitlicher Benutzung des sechsten - oder bei einem 5-Gang-Getriebe unter Verwendung des fünften Ganges - wäre in der Praxis aufgrund der starken Unterschiede im Übersetzungverhältnis nicht möglich.

Die in Figur 1 mit dem Gang 4' angedeutete Variante stellt daher einen zu bevorzugenden Kompromiß dar. Zwischen den Gängen 1, 2 und 3 wird jeweils nur benachbart geschaltet, da diese auf unterschiedlichen Getriebeeingangswellen E₁ und E₂ angeordnet sind. Dabei wird ein Schaltverfahren in Übereinstimmung mit der älteren deutschen Patentanmeldung verwendet. Zwischen den Gängen 3, 4 und 5 ist ein Schalten mit Hilfe des sechsten Ganges als Hilfsgang möglich, so daß auch Gangsprünge, beispielsweise vom dritten in den fünften Gang, ermöglicht werden. Ebenso ist ein Schalten vom zweiten direkt in den vierten Gang möglich, wobei jedoch kein Hilfsgang benötigt wird, sondern direkt mit dem Verfahren gemäß der älteren deutschen Patentanmeldung gearbeitet werden kann.

## Patentansprüche

1. Verfahren zum Schalten eines Doppelkupplungsgetriebes (10) mit zwei Getriebeeingangswellen (E₁, E₂) und einer Getriebeabtriebswelle (A), wobei jeder Eingangswelle eine Reibkupplung (K₁, K₂) zugeordnet ist und im Ausgangszustand eine der beiden Kupplungen im Haftzustand ein Motormoment überträgt, und die andere Kupplung geöffnet ist, wobei der einzulegende Gang auf der gleichen einen Getriebeeingangswelle angeordnet ist wie der eingelegte Gang, **dadurch gekennzeichnet, daß** auf der anderen Getriebeeingangswelle mindestens ein weiterer Gang angeordnet ist, daß bei einem Gangwechsel vom eingelegten Gang in den einzulegenden Gang der auf der anderen Getriebeeingangswelle angeordnete weitere Gang, dessen Übersetzungsverhältnis länger ist als dasjenige sowohl des einzulegenden Ganges wie des eingelegten Ganges, zur Erzeugung eines das Fahrzeug während des Gangwechsels treibenden Füllmomentes verwendet wird.

2. Verfahren nach Anspruch 1, **dadurch gekennzeichnet, daß**
- auf der anderen Getriebeeingangswelle vorbereitend der weitere Gang eingelegt wird oder bereits eingelegt ist,
- die eine Kupplung durch einen Schlupfregler geregelt so weit geöffnet wird, daß sie an der Gleitgrenze arbeitet,
- die andere Kupplung gesteuert soweit geschlossen wird, bis die eine, durch den Schlupfregler an der Gleitgrenze betriebene Kupplung kein Moment mehr überträgt, und statt dessen das Füllmoment über den weiteren Gang übertragen wird,
- die eine Kupplung dann voll geöffnet wird, so daß die andere Kupplung allein die Motorleistung überträgt,
- der eingelegte Gang im wesentlichen momentenfrei herausgenommen wird,
- die eine Kupplung wieder geschlossen wird,
- die eine Getriebeeingangswelle mittels des weiteren Ganges und geeigneter Regelung der anderen Kupplung, z.B. Schließen beim Hochschalten/Öffnen beim Herunterschalten, auf die Synchrondrehzahl des neuen einzulegenden Ganges gebracht wird,
- bei synchroner Drehzahl der einen Getriebeeingangswelle der neue einzulegende Gang eingelegt wird,
- die andere Kupplung geregelt geöffnet wird, so daß die eine Kupplung Moment überträgt,
- bis die eine Kupplung gemäß der gewählten Stellfunktion wieder das gesamte Motormoment überträgt.

3. Verfahren nach Anspruch 1, **dadurch gekennzeichnet, daß**
- auf der anderen Getriebeeingangswelle vorbereitend der weitere Gang eingelegt wird oder bereits eingelegt ist,
- die andere Kupplung durch einen Schlupfregler geregelt so weit geschlossen wird, daß sie an der Gleitgrenze arbeitet,
- die eine Kupplung gesteuert geöffnet wird, bis die andere, durch den Schlupfregler an der Gleitgrenze betriebene Kupplung das volle, aus Motorleistung und Drehzahl sich ergebende Moment überträgt,
- die andere Kupplung dann voll geschlossen wird, so daß die andere Kupplung allein die Motorleistung überträgt,
- wenn die eine Kupplung voll geöffnet ist, der eingelegte Gang im wesentlichen momentenfrei herausgenommen wird,
- die eine Kupplung wieder geschlossen wird,
- die eine Getriebeeingangswelle mittels des weiteren Ganges und geeigneter Regelung der anderen Kupplung, z.B. Schließen beim Hochschalten/Öffnen beim Herunterschalten, auf die Synchrondrehzahl des neuen einzulegenden Ganges gebracht wird,
- bei synchroner Drehzahl der einen Getriebeeingangswelle der neue einzulegende Gang eingelegt wird,
- die andere Kupplung geregelt geöffnet wird, so daß die eine Kupplung Moment überträgt,
- bis die eine Kupplung gemäß der gewählten Stellfunktion wieder das gesamte Motormoment überträgt.

4. Verfahren nach einem der vorhergehenden Ansprüche, **dadurch gekennzeichnet, daß** der eingelegte und der einzulegende Gang um mehr als einen Gang auseinanderliegen.

5. Verfahren nach einem der vorhergehenden Ansprüche, **dadurch gekennzeichnet, daß** bei Momentenfreiheit des eingelegten Ganges eine den Gang schaltende formschlüssige Verbindung durch Federkraft automatisch in einen frei rotierende Zustand gedrückt wird.

6. Verfahren nach einem der vorhergehenden Ansprüche, **dadurch gekennzeichnet, daß** die andere Kupplung (K₂) bei eingelegtem weiterem Gang zur Synchronisation der einen Getriebeeingangswelle (E₁) so geregelt wird, daß durch Öffnen oder Schließen ein Beschleunigungs- oder Bremsmoment erzeugt wird, das einem gewünschten Drehzahlgradienten (dw/dt) der Getriebeeingangswelle (E₁) entspricht.

7. Doppelkupplungsgetriebe mit zwei Getriebeeingangswellen (E₁,E₂) und einer Getriebeabtriebswelle und zugehörigen Zahnradpaarungen, wobei jeder Eingangswelle eine Reibkupplung (K₁,K₂) zugeordnet ist und im Ausgangszustand eine der beiden kupplungen im Haftzustand ein Motormoment überträgt und die andere Kupplung geöffnet ist, wobei der einzulegende Gang auf der gleichen einen Getriebeingangswelle angeordnet wie der eingelegte Gang, zum Schalten nach einem Verfahren gemäß einem oder mehreren der vorhergehenden Ansprüche, **dadurch gekennzeichnet, daß** die treibenden Zahnräder von zumindest drei Gängen auf der einen Getriebeeingangswelle und die treibenden Zahnräder von lediglich zwei Gängen auf der anderen Getnebeeingangswelle angeordnet sind.

8. Doppelkupplungsgetriebe nach Anspruch 7, **dadurch gekennzeichnet, daß** es sechs Zahnradpaarungen für sechs Gänge aufweist und die treibenden Zahnräder der Gänge 1, 3, 4 und 5 auf der einen Getriebeeingangswelle (E₁) und die treibenden Zahnräder der Gänge 2 und 6 auf der anderen Getriebeeingangswelle (E₂) angeordnet sind.

## Claims

1. Method for shifting a twin-clutch transmission (10) with two transmission input shafts (E₁, E₂) and a transmission output shaft (A), each input shaft being assigned a friction clutch (K₁, K₂) and, in the initial state, one of the two clutches transmitting an engine torque in a state of static friction, and the other clutch being open, the gear to be engaged being arranged on the same one transmission input shaft as the engaged gear, **characterized in that** at least one further gear is arranged on the other transmission input shaft, **in that**, in the case of a gear change from the engaged gear to the gear to be engaged, the further gear arranged on the other transmission input shaft, the transmission ratio of which is higher than that both of the gear to be engaged and of the engaged gear, is used to produce a filler torque which drives the vehicle during the gear change.

2. Method according to Claim 1, **characterized in that**
- the further gear is engaged on the other transmission input shaft by way of preparation or is already engaged,
- the one clutch is opened to such an extent in a regulated manner by a slip controller that it operates at the slip limit,
- the other clutch is closed in a controlled manner until the one clutch, which is operated at the slip limit by the slip controller, no longer transmits any torque, and, instead, the filler torque is transmitted by the further gear,
- the one clutch is then fully opened, so that the other clutch transmits the engine power alone,
- the engaged gear is disengaged in an essentially torque-free manner,
- the one clutch is closed again,
- the one transmission input shaft is brought to the synchronization speed of the new gear to be engaged by means of the further gear and appropriate regulation of the other clutch, e.g. closure when changing up/opening when changing down,
- when the one transmission input shaft is at the synchronous speed, the new gear to be engaged is engaged,
- the other clutch is opened in a regulated manner, so that the one clutch transmits torque,
- until the one clutch is again transmitting the entire engine torque in accordance with the selected actuating function.

3. Method according to Claim 1, **characterized in that**
- the further gear is engaged on the other transmission input shaft by way of preparation or is already engaged,
- the other clutch being closed in a regulated manner by a slip controller to such an extent that it operates at the slip limit,
- the one clutch is opened in a controlled manner until the other clutch, which is operated at the slip limit by the slip controller, is transmitting the full torque resulting from the engine power and speed,
- the other clutch is then fully closed, so that the other clutch transmits the engine power on its own,
- when the one clutch is fully open, the engaged gear is disengaged in an essentially torque-free manner,
- the one clutch is closed again,
- the one transmission input shaft is brought to the synchronization speed of the new gear to be engaged by means of the further gear and appropriate regulation of the other clutch, e.g. closure when changing up/opening when changing down,
- when the one transmission input shaft is at the synchronous speed, the new gear to be engaged is engaged,
- the other clutch is opened in a regulated manner, so that the one clutch transmits torque,
- until the one clutch is again transmitting the entire engine torque in accordance with the selected actuating function.

4. Method according to one of the preceding claims, **characterized in that** the engaged gear and the gear to be engaged are more than one gear apart.

5. Method according to one of the preceding claims, **characterized in that**, when the engaged gear is free from torque, a positive connection which shifts the gear is pushed automatically into a freely rotating state by spring force.

6. Method according to one of the preceding claims, **characterized in that**, with the further gear engaged, the other clutch (K₂) is regulated in such a way to synchronize the one transmission input shaft (E₁) that an acceleration or braking torque corresponding to a desired speed gradient (dw/dt) of the transmission input shaft (E₁) is produced by opening or closure.

7. Twin-clutch transmission having two transmission input shafts (E₁, E₂) and a transmission output shaft and associated gear wheel pairs, a friction clutch (K₁, K₂) being assigned to each input shaft and, in the initial state, one of the two clutches transmitting an engine torque in a state of static friction and the other clutch being open, the gear to be engaged being arranged on the same one transmission input shaft as the engaged gear, for gear changing according to a method in accordance with one or more of the preceding claims, **characterized in that** the driving gear wheels of at least three gears are arranged on the one transmission input shaft and the driving gear wheels of just two gears are arranged on the other transmission input shaft.

8. Twin-clutch transmission according to Claim 7, **characterized in that** it has six gear wheel pairs for six gears and the driving gear wheels of gears 1, 3, 4 and 5 are arranged on the one transmission input shaft (E₁) and the driving gear wheels of gears 2 and 6 are arranged on the other transmission input shaft (E₂).

## Revendications

1. Procédé de changement de vitesses d'une boîte de vitesses à double embrayage (10) comprenant deux arbres d'entrée de boîte de vitesses (E₁, E₂) et un arbre de sortie de boîte de vitesses (A), un embrayage à friction (K₁, K₂) étant associé à chaque arbre d'entrée et dans l'état initial, l'un des deux embrayages transmettant un couple du moteur dans l'état d'adhérence et l'autre embrayage étant ouvert, la vitesse à enclencher étant disposée sur le même arbre d'entrée de boîte de vitesses que la vitesse enclenchée, **caractérisé en ce que** sur l'autre arbre d'entrée de boîte de vitesses est disposée au moins une autre vitesse, **en ce que** dans le cas d'un changement de vitesse de la vitesse enclenchée à la vitesse à enclencher, l'autre vitesse disposée sur l'autre arbre d'entrée de boîte de vitesses, dont le rapport de transmission est plus long que celui de la vitesse à enclencher et aussi de la vitesse enclenchée, est utilisée pour produire un couple de remplissage entraînant le véhicule pendant le changement de vitesse.

2. Procédé selon la revendication 1, **caractérisé en ce que**
- sur l'arbre d'entrée de boîte de vitesses, l'autre vitesse est enclenchée à titre préliminaire ou est déjà enclenchée,
- l'un des embrayages, régulé par un régulateur de glissement, est ouvert dans une mesure telle qu'il fonctionne à la limite de glissement,
- l'autre embrayage est fermé de manière commandée jusqu'à ce que le premier embrayage entraîné par le régulateur de glissement à la limite de glissement ne transmette plus aucun couple, et au lieu de cela le couple de remplissage est transmis par le biais de l'autre vitesse,
- le premier embrayage est alors complètement ouvert, de sorte que l'autre embrayage transmette à lui seul la puissance du moteur,
- la vitesse enclenchée est désenclenchée pratiquement sans couple,
- le premier embrayage est à nouveau fermé,
- le premier arbre d'entrée de boîte de vitesses, au moyen de l'autre vitesse et d'une régulation appropriée de l'autre embrayage, par exemple une fermeture dans le cas d'un passage à une vitesse supérieure ou une ouverture dans le cas d'un passage à une vitesse inférieure, est amené à la vitesse de rotation synchrone de la nouvelle vitesse à enclencher,
- lorsque le premier arbre d'entrée de boîte de vitesses a atteint une vitesse synchrone, la nouvelle vitesse à enclencher est enclenchée,
- l'autre embrayage est ouvert de manière régulée de sorte que le premier embrayage transmette le couple,
- jusqu'à ce que le premier embrayage transmette à nouveau le couple moteur total suivant la fonction de réglage sélectionnée.

3. Procédé selon la revendication 1, **caractérisé en ce que**
- sur l'autre arbre d'entrée de boîte de vitesses, l'autre vitesse est enclenchée à titre préliminaire ou est déjà enclenchée,
- l'autre embrayage, régulé par un régulateur de glissement, est fermé dans une mesure telle qu'il fonctionne à la limite de glissement,
- le premier embrayage est ouvert de manière commandée jusqu'à ce que l'autre embrayage entraîné par le régulateur de glissement à la limite de glissement transmette la totalité du couple résultant de la puissance du moteur et de la vitesse de rotation,
- l'autre embrayage est alors complètement fermé, de sorte que l'autre embrayage transmette à lui seul la puissance du moteur,
- si le premier embrayage est complètement ouvert, la vitesse enclenchée est essentiellement désenclenchée sans couple,
- le premier embrayage est à nouveau fermé,
- le premier arbre d'entrée de boîte de vitesses, au moyen de l'autre vitesse et d'une régulation appropriée de l'autre embrayage, par exemple une fermeture dans le cas d'un passage à une vitesse supérieure ou une ouverture dans le cas d'un passage à une vitesse inférieure, est amené à la vitesse de rotation synchrone de la nouvelle vitesse à enclencher,
- lorsque le premier arbre d'entrée de boîte de vitesses a atteint une vitesse synchrone, la nouvelle vitesse à enclencher est enclenchée,
- l'autre embrayage est ouvert de manière régulée de sorte que le premier embrayage transmette le couple,
- jusqu'à ce que le premier embrayage transmette à nouveau le couple moteur total suivant la fonction de réglage sélectionnée.

4. Procédé selon l'une quelconque des revendications précédentes, **caractérisé en ce que** la vitesse enclenchée et la vitesse à enclencher sont espacées de plus d'une vitesse.

5. Procédé selon l'une quelconque des revendications précédentes, **caractérisé en ce que** lorsque la vitesse enclenchée n'est pas soumise à un couple, une liaison par engagement positif sélectionnant la vitesse est automatiquement poussée par la force d'un ressort dans un état de libre rotation.

6. Procédé selon l'une quelconque des revendications précédentes, **caractérisé en ce que** l'autre embrayage (K₂), lorsque l'autre vitesse est enclenchée pour la synchronisation du premier arbre d'entrée de boîte de vitesses (E₁), est régulé de telle sorte que l'ouverture ou la fermeture provoque un couple d'accélération ou de freinage qui correspond à un gradient de vitesse de rotation souhaité (dw/dt) de l'arbre d'entrée de boîte de vitesses (E₁).

7. Boîte de vitesses à double embrayage comprenant deux arbres d'entrée de boîte de vitesses (E₁, E₂) et un arbre de sortie de boîte de vitesses, et des paires de roues dentées associées, un embrayage à friction (K₁, K₂) étant associé à chaque arbre d'entrée et dans l'état initial, l'un des deux embrayages transmettant un couple du moteur dans l'état d'adhérence et l'autre embrayage étant ouvert, la vitesse à enclencher étant disposée sur le même premier arbre d'entrée de boîte de vitesses que la vitesse enclenchée, pour le changement de vitesse selon un procédé selon l'une ou plusieurs des revendications précédentes, **caractérisée en ce que** les roues dentées menantes d'au moins trois vitesses sont disposées sur le premier arbre d'entrée de boîte de vitesses et les roues dentées menantes de seulement deux vitesses sont disposées sur l'autre arbre d'entrée de boîte de vitesses.

8. Boîte de vitesses à double embrayage selon la revendication 7, **caractérisée en ce qu**'elle présente six paires de roues dentées pour six vitesses, et les roues dentées menantes des vitesses 1, 3, 4 et 5 se trouvent sur le premier arbre d'entrée de boîte de vitesses (E₁) et les roues dentées menantes des vitesses 2 et 6 se trouvent sur l'autre arbre d'entrée de boîte de vitesses (E₂).
